Europäisches Patentamt

European Patent Office

Office européen des brevets

(19)

(11) **EP 0 982 416 B1**

(12) **EUROPEAN PATENT SPECIFICATION**

(45) Date of publication and mention
of the grant of the patent:
**04.06.2003 Bulletin 2003/23**

(51) Int Cl.⁷: $D01F\ 9/127$, D01F 9/133

(21) Application number: **99905270.7**

(86) International application number:
**PCT/JP99/00785**

(22) Date of filing: **23.02.1999**

(87) International publication number:
**WO 99/043877 (02.09.1999 Gazette 1999/35)**

(54) **METHOD AND APPARATUS FOR MANUFACTURING CARBON FIBER COILS**

VERFAHREN UND VORRICHTUNG ZUR HERSTELLUNG VON KOHLENSTOFFFASERSPULEN

PROCEDE ET DISPOSITIF POUR LA FABRICATION DE BOBINES EN FIBRE DE CARBONE

(84) Designated Contracting States:
**DE FR GB**

(30) Priority: **27.02.1998 JP 4768698**

(43) Date of publication of application:
**01.03.2000 Bulletin 2000/09**

(73) Proprietors:
• **Motojima, Seiji**
  **Gifu-shi, Gifu-ken 502-0813 (JP)**
• **CMC Technology Development Co., Ltd.**
  **Kakamigahara City, Gifu 509-0108 (JP)**

(72) Inventors:
• **MOTOJIMA, Seiji**
  **Gifu-shi Gifu-ken 502-0813 (JP)**

• **IDO, Katsutomi Elec. Prop. Res. Institute Co.ltd.**
  **Gifu-ken 501-3303 (JP)**
• **NIWA, Teisuke**
  **Kakamigahara-shi Gifu-ken 504-0035 (JP)**

(74) Representative: **Staeger - Sperling**
  **Müllerstrasse 3**
  **80469 München (DE)**

(56) References cited:
EP-A- 0 375 397          GB-A- 2 248 230
JP-A- 1 213 412          JP-A- 3 174 018
JP-A- 4 222 228

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## EP 0 982 416 B1

**Description**

FIELD OF THE INVENTION

The present invention relates to a method of and an apparatus for manufacturing carbon fiber coils, which are used, for example, for micro-sensors and micro-mechanical elements and as electromagnetic wave-absorbing materials.

PRIOR ART

Research has been done on spirally extending carbon fibers (carbon fiber coils), which are considered to be useful, new materials. Carbon fiber coils are manufactured by chemical vapor deposition (CVD). CVD is a method by which thin-filmy or particulate solids are composed from gaseous materials by chemical reactions. In CVD, metallic catalysts are frequently used.

A metallic catalyst in the form of superfine particles is born by surfaces of a substrate. The substrate is placed at a predetermined position within a cylindrical-shaped reaction chamber. The reaction chamber has openings at both ends, and a plurality of inflow ports are formed on its outer peripheral surface. A stock gas and a catalytic gas are made to flow into the reaction chamber from the corresponding inflow ports. Further, inert gases are made to flow into the reaction chamber. Most of the external surfaces of the reaction chamber are substantially covered by a heater provided with electric heating wires.

In manufacturing carbon fiber coils, the openings are sealed. When the temperature in the reaction chamber reaches a predetermined value upon direct heating of the reaction chamber by means of the heater, the stock gas is subjected to thermal decomposition. Then metallic catalyst particles generate spiral carbon fibers on surfaces of the substrate. The fibers are generated spirally because the metallic catalyst is anisotropic in its catalytic activity. More specifically, carbon fibers grow rapidly on portions of the catalyst having a great catalytic activity and grow slowly on portions of the catalyst having a small catalytic activity. Therefore, the carbon fibers grow spirally and curl.

However, with the conventional method of manufacturing carbon fiber coils, the reaction chamber is directly heated by a heater provided with electric heating wires. Therefore, the electric heating wires generate an electromagnetic field within the reaction chamber to cause the stock gas in the reaction chamber and the metallic catalyst to be exposed to the electromagnetic field. As a result, a good yield of carbon fibers having a desired spiral configuration is not obtained, and linear-shaped fibers, carbon in the form of particles, hard agglomerates and sheets are generated. Even when carbon fiber coils are generated in the electromagnetic field, they are frequently oblate in cross section. Therefore, such carbon fiber coils do not have adequate strength (for example, tensile strength). Further, the resulting carbon fiber coils have a large coil diameter and a small coil length.

SUMMARY OF THE INVENTION

The first object of the present invention is to provide a method of and an apparatus for manufacturing carbon fiber coils at a high yield. The second object of the present invention is to provide a method of and an apparatus for manufacturing carbon fiber coils having adequate strength, a small coil diameter and a large coil length.

To attain the above-described objects, the present invention provides a method of manufacturing carbon fiber coils by heating a stock gas, which is subjected to thermal decomposition to generate a solid carbon, and a catalytic gas, which promotes thermal decomposition of the stock gas, in a reaction chamber. The method comprises the steps of placing a solid catalyst at a predetermined position within the reaction chamber, supplying the reaction chamber with the stock gas and the catalytic gas, and heating an interior of the reaction chamber so as to grow carbon fiber coils from the stock gas. In the heating step, an electromagnetic field caused by the heating step is substantially absent in the reaction chamber. Accordingly, it is possible to manufacture carbon fiber coils having a desired size.

Also, the present invention provides an apparatus for manufacturing carbon fiber coils. The apparatus comprises a reaction chamber supplied with a stock gas and a catalytic gas, a solid catalyst placed at a predetermined position in the reaction chamber and a heating device for heating the interior of the reaction chamber. The reaction chamber is supplied with the stock gas and the catalytic gas through an inflow port or inlets. The stock gas is subjected to thermal decomposition to generate a solid carbon. The catalytic gas promotes thermal decomposition of the stock gas. When a heating device heats the interior of the reaction chamber, thermal decomposition of the stock gas causes carbon fiber coils to grow. The heating device substantially does not create an electromagnetic field in the reaction chamber at the time of heating.

## BRIEF DESCRIPTION OF THE DRAWINGS

Features of the present invention believed to be novel are particularly clarified in the appended claims. Objects of the present invention as well as advantages thereof will be understood by referring descriptions of the following embodiments, which are preferred at present, together with the accompanying drawings.

Figure 1 is a cross sectional view showing an apparatus for manufacturing carbon fiber coils, according to a first embodiment of the present invention.

Figure 2 is a cross sectional view showing an apparatus for manufacturing carbon fiber coils, according to a second embodiment of the present invention.

## DESCRIPTION OF THE PREFERRED EMBODIMENTS

First Embodiment

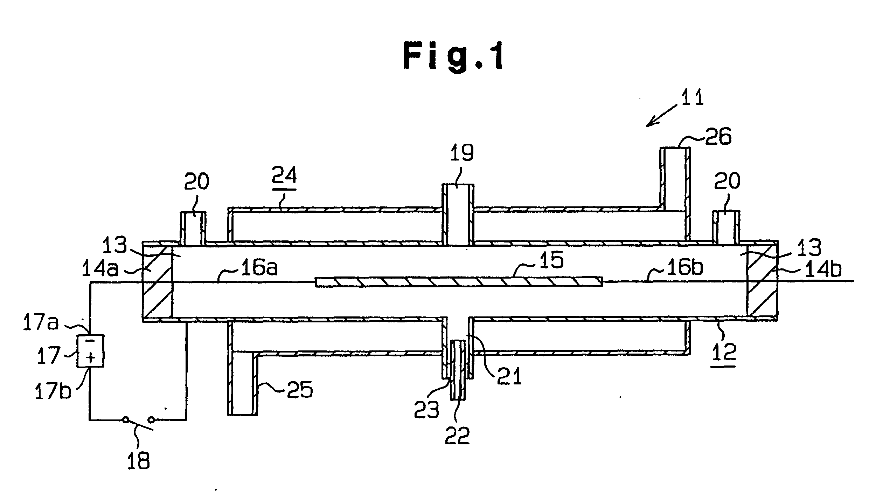

The first embodiment of the present invention will be described hereinafter in detail. First, a manufacturing apparatus 11 for manufacturing carbon fiber coils shown in Figure 1 will be described. The apparatus 11 includes a cylindrical reaction chamber 12, a substrate 15 and a heating chamber 24. The reaction chamber 12 is formed of quartz, alumina, ceramic materials, a metallic pipe, the inner surface of which is coated with ceramic material, or a heat resistant metallic material such as nickel, tungsten or titanium. Quartz is preferable because it is low in catalytic activity and resists undesirable side reactions.

Preferably, the reaction chamber 12 has an inner diameter in the range of 30 to 150 mm. More preferably, the reaction chamber 12 has an inner diameter in the range of 30 to 60 mm in order to permit a stock gas and a catalytic gas to flow on the surface of the substrate 15 efficiently. In the first embodiment, the reaction chamber 12 has an inner diameter of 60 mm and a total length of 1000 mm. The reaction chamber 12 has openings 13 at its ends. The openings 13 are plugged by first and second seal members 14a, 14b, respectively, which are formed from a material having heat resistance at predetermined temperatures.

The substrate 15, which is in the form of a square plate, is formed of a sintered body, a main component of which is nickel or graphite. Surfaces of the substrate 15 are coated with a powdered metallic catalyst. Carbon fiber coils are generated on surfaces of the metallic catalyst. First and second connection wires 16a, 16b are connected to the both ends of the substrate 15. The first connection wire 16a extends through the first seal member 14a and is connected to a DC power source 17 located outside the reaction chamber 12. The second connection wire 16b extends through the second seal member 14b and is free at its distal end. The first and second connection wires 16a, 16b support the substrate 15 in floating fashion so that the substrate does not contact the inner walls of the reaction chamber 12.

A negative terminal 17a of the DC power source 17 is connected to the substrate 15 through the first connection wire 16a. A positive terminal 17b is connected to the reaction chamber 12. A power switch 18 is placed between the positive terminal 17b of the DC power source 17 and the reaction chamber 12. When the switch 18 is turned ON, DC voltage is applied to the substrate 15 from the DC power source 17. At this time, a negative electric field is formed around the substrate 15 because the surfaces of the substrate 15 in the reaction chamber 12 are negatively charged. To enhance the yield of carbon fiber coils, the DC power source 17 preferably has a voltage in the range of 10 to 3000 V. More preferably, the DC power source 17 has a voltage in the range of 100 to 1000 V. Most preferably, the DC power source 17 has a voltage in the range of 100 to 750 V.

Transition metals and their compounds can be used as a catalyst. Compounds of transition metals include metallic oxides, metallic carbides, metallic sulfides, metallic phosphides, metallic carbonates and metallic carbosulfides. As a catalyst, transition metals such as nickel, titanium or tungsten or solid solutions of such metals and oxygen, metallic oxides, metallic carbides, metallic sulfides, metallic phosphides, metallic carbonates or metallic carbosulfides are preferable. Among such materials, nickel is particularly preferable. In the case where nickel is used as a catalyst, carbon fiber coils having a preferred size are generated. Presumably, this is because the crystal surfaces of nickel have a suitable configuration and are anisotropic with respect to catalytic activity. The configuration of the catalyst does not particularly matter provided that the catalyst provides catalytic activity. It is possible to use, for example, a powdered catalyst, a plate-shaped catalyst, a plate-shaped catalyst formed by sintering powder, and a catalyst formed by subjecting metallic powder or surfaces of a sheet material to oxidation, carbonization, phosphorization or carbosulfidization under predetermined conditions. A preferable catalyst configuration is fine particles having an average particle size of around 5 $\mu$m or a sintered sheet formed of such fine particles. In the case where the metallic catalyst comprises fine particles, such particles may be sprayed or coated on the substrate 15.

A size, that is, coil diameter, coil pitch and coil length of the carbon fiber coils depends on the anisotropy of the catalytic activity on the respective crystal faces of and on the particle size of the metallic catalyst. Therefore, when the anisotropy of the catalytic activity changes, the sizes of the carbon fiber coils vary. For example, the coil diameter tends to become smaller as the particle size of the metallic catalyst becomes smaller.

A cylindrical inflow port 19 is formed on an outer peripheral surface of the reaction chamber 12. When carbon fiber coils are to be manufactured, a mixed gas containing a stock gas is made to flow from the inflow port 19. The mixed gas includes the stock gas, which is used as a carbon source for the carbon fiber coils, a catalytic gas, which promotes growth of the coils, and a balance gas. The balance gas is used as desired to remove a factor, such as oxygen gas or the like, that inhibits growth of carbon fiber coils.

As the stock gas, a gas that undergoes thermal decomposition to generate carbon, for example, acetylene, methane, propane or carbon monoxide is used. Acetylene is preferred to permit carbon fibers to grow in the form of a spiral having a preferable size.

As the catalytic gas, a gas containing elements of the fifteenth and sixteenth groups in the periodic table such as sulfur, thiophene, methylmercaptan, hydrogen sulfide, phosphorus, phosphorus trichloride is used. Among them, thiophene and hydrogen sulfide are preferred to improve the yield of carbon fiber coils.

The mixing ratio of the balance gas is adjusted to be 20 to 30 volume % relative to the total quantity of a gas flowing through the inflow port 19.

The inflow port 19 preferably has an inner diameter in the range of 5 to 50 mm in order to maintain flow rates and flow velocities of the stock gas, the catalytic gas and the balance gas which flow from the inflow port 19 in predetermined quantity ranges. More preferably, the inflow port has an inner diameter in the range of 5 to 20 mm. Incidentally, the inflow port 19 in the first embodiment has an inner diameter of 10 mm.

Flow velocities of the stock gas, the catalytic gas and the balance gas must be suitably adjusted to improve the yield of carbon fiber coils. When the flow velocities of the respective gases are represented in terms of linear distance along which they flow through the inflow port 19 per minute, the preferred total of the linear velocities at room temperature and at 1 atm is in the range of 100 to 3000 cm/min. More preferably, the total of the linear velocities is in the range of 200 to 1500 cm/min. Most preferably, the total of the linear velocities is in the range of 300 to 1000 cm/min.

The distance between the outlet of the inflow port 19 and the substrate 15 must be kept in a predetermined range to improve the yield of carbon fiber coils. The shorter the distance between the outlet of the inflow port 19 and the substrate 15, the more the yield of carbon fiber coils is improved. When the distance between the outlet of the inflow port 19 and the substrate 15 is less than 1 mm or greater than 100 mm, however, carbon fiber coils cannot be obtained at all and, instead, only carbon powder or linear carbon fibers precipitate. Therefore, the above-described distance is preferably in the range of 1 to 100 mm. The above-described distance is more preferably in the range of 10 to 25 mm.

To improve the yield of carbon fiber coils, the distance between the outlet of the inflow port 19 and the substrate 15 is related closely to the total of the flow velocities of the respective gases at room temperature and at 1 atm. The greater the distance between the outlet of the inflow port 19 and the substrate 15, the greater the preferred total of the flow velocities of the respective gases. For example, when the distance between the outlet of the inflow port 19 and the substrate 15 is 1 to 20 mm, the total of the linear velocities of the respective gases flowing through the inflow port 19 at room temperature and at 1 atm is set to be 400 to 800 cm/min. When such distance is 5 to 40 mm, the total of the linear velocities is set to 800 to 1200 cm/min. When such distance is 10 to 100 mm, the total of the linear velocities is set to 1200 to 1500 cm/min.

To improve the yield of carbon fiber coils, the ratio of the distance (unit cm) between the outlet of the inflow port 19 and the substrate 15 to the linear velocity (unit cm/min.) of the stock gas under conditions of room temperature and 1 atm must be set from 1/10000 to 1/10. The ratio is preferably in the range of 1/2000 to 1/10. The ratio is more preferably in the range of 1/500 to 1/100.

The concentration of the catalytic gas in the reaction atmosphere has an influence on the growth of carbon fiber coils. When the concentration of the catalytic gas is less than 0.01 volume % or greater than 5 volume %, it is difficult to make carbon fiber coils grow. The concentration is preferably in the range of 0.01 to 5 volume %. The concentration is more preferably in the range of 0.1 to 0.5 volume %.

A pair of cylindrical injection ports 20 are formed on a peripheral surface of the reaction chamber 12 near its ends. The balance gas is injected into the reaction chamber 12 through the injection ports 20. Injection of the balance gas into the reaction chamber 12 causes the balance gas to replace a compound, such as oxygen gas, which is unnecessary in the chemical reaction. Therefore, it is possible to prevent surplus chemical reactions or undesirable influences from being caused in the generation of carbon fiber coils. As the balance gas, an inert gas, such as nitrogen and helium, which does not react with substances associated with the reaction, or hydrogen gas may be used.

A cylindrical outflow port 21 is formed centrally on the peripheral surface of the reaction chamber 12 to be opposite to the inflow port 19. An exhaust pipe 22 is mounted in the outflow port 21. A third seal member 23 formed of heat resistant material fills the space between the outer surface of the exhaust pipe 22 and the inner surface of the outflow port 21. The stock gas, the catalytic gas and the balance gas, which flow into the reaction chamber 12, and waste gas, which is produced by the reaction, are discharged from the reaction chamber 12 through the exhaust pipe 22.

The heating chamber 24 substantially covers the entire reaction chamber 12. The heating chamber 24 comprises an inflow pipe 25 and an outflow pipe 26. The inflow pipe 25 is formed on the underside of a left end of the heating chamber 24 and the outflow pipe 26 is formed on the top of a right end of the heating chamber 24. Hot air from an unillustrated heat source (for example, a gas fired boiler) is fed into the heating chamber 24 via the inflow pipe 25. The hot air heats the reaction chamber 12 while passing through the heating chamber 24. Then the hot air is discharged from the outflow pipe 26. In this manner, the temperature in the reaction chamber 12 is raised to a predetermined value. In place of such hot air, a combustion gas obtained from liquefied natural gases (LPG) or a fluid having a predetermined temperature may be used as a heat transfer medium. For example, nitrogen, carbon dioxide or argon can be used as a heat transfer medium. As a result of heating the reaction chamber 12 to a predetermined temperature, the reaction gas is thermally decomposed and ionized to provide a reactant with a positive electric charge.

When the reaction temperature is less than 700 °C or greater than 830 °C, the yield of carbon fiber coils rapidly decreases. Accordingly, the temperature in the reaction chamber 12 is preferably greater than 700 °C and less than 830 °C during the reaction to improve the yield of carbon fiber coils. The temperature is more preferably greater than 750 °C and less than 780 °C.

A manufacturing process for carbon fiber coils will be described hereinbelow.

The substrate 15, which is coated with nickel particles, is supported by the connection wires 16a, 16b to be located at a predetermined position within the reaction chamber 12. The substrate 15 is spaced a predetermined distance from the outlet of the inflow port 19. The first and second seal members 14a, 14b seal the opposite openings 13 in the reaction chamber 12.

Thereafter acetylene, serving as the stock gas, thiophene, serving as the catalytic gas and hydrogen gas, serving as a balance gas, flow simultaneously into the reaction chamber 12 from the inflow port 19. The mixed gases move while contacting the surfaces of the substrate 15. Then, the mixed gases flow out of the outflow port 21 via the exhaust pipe 22. Further, nitrogen gas is injected as a balance gas from the pair of injection ports 20. The respective gases continue to flow until the reaction terminates.

A negative DC voltage is applied to the substrate 15 with the switch 18 ON. Then a negative electric field is formed around the substrate 15. Further, hot air is fed into the heating chamber 24 from a gas fired boiler (not shown). When the reaction chamber 12 is raised in temperature, the stock gas is excited and the CVD reaction proceeds. Then, carbon fibers begin to grow on the surfaces of the substrate 15, more specifically, at crystal growth points on the surfaces of the metallic catalyst. The reaction was effected during two hours while the temperature in the reaction chamber 12 was kept at 750 °C.

Existing in the reaction system for generating the CVD reaction are nickel (the metallic catalyst), carbon (the stock material), hydrogen, a small quantity of sulfur or phosphorus (the catalytic gas) and oxygen, a slight amount of which remains slightly in the reaction chamber 12. The reaction system consisting of these five elements is placed in the negative electric field by a negative voltage applied to the substrate 15. The reactant, which is generated by excitation of acetylene, has a positive electric charge, so that the reactant is efficiently conducted to the surfaces of the substrate 15, or the surfaces of the nickel catalyst. Being brought into contact with the surfaces of the catalyst, the reactant is subjected to thermal decomposition there. As a result, crystals of nickel carbide ($Ni_3C$) are formed, which contain a minute quantity of impurities (a small quantity of sulfur and a trace quantity of oxygen). The crystals of nickel carbide ($Ni_3C$) have a short life and decompose rapidly into nickel and carbon. Such thermal decomposition proceeds repetitively on the surfaces of the nickel catalyst whereby carbon diffuses and. carbon fibers grow.

The catalytic activity of the nickel catalyst is anisotoropic. Carbon fibers grow rapidly on portions having great catalytic activity and slowly on portions having small catalytic activity. Thereby the carbon fibers curl. At this time, the respective carbon fiber coils have a substantially circular cross section.

Growth of carbon fiber coils is believed to proceed substantially simultaneously on adjacent crystal faces of the same catalytic crystal. That is, carbon fibers elongate spirally from adjacent crystal faces in different directions. Therefore, two carbon fiber coils extending from adjacent crystal faces grow like double-spiral coils connected to each other at a position of the catalytic crystal. The carbon fiber coils have a structure similar to that of deoxyribonucleic acid (DNA) of an organism, so that they are called cosmomimetic carbon microcoils.

The reaction chamber 12 is heated by the hot air generated from the gas fired boiler, so that no electromagnetic field is formed in the reaction chamber 12. Therefore, deposition of linear carbon fibers, carbon powder, hard carbon agglomerates or carbon sheet, which would be generated as the result that the reactant were influenced by such electromagnetic field, is prevented. As a result, the yield of the carbon fiber coils increases.

Because a negative electric charge acts on the metallic catalyst born by the substrate 15, the positively charged reactant is likely to contact the catalyst surfaces. Then, since the catalytic activity is anisotropic, carbon fiber coils having a desired coil diameter can be efficiently obtained. Therefore, the quantity of acetylene wasted on undesirable reactions is decreased. Accordingly, the quantity of acetylene required for obtaining a require amount of carbon fiber coils is reduced, and the unreacted acetylene can be reused.

The first embodiment has the following effects.

The reaction chamber 12 is heated by the hot air fed to the heating chamber 24. Therefore, the reaction chamber 12 is not exposed to an electromagnetic field from outside. Accordingly, adverse influences caused by the electromagnetic field, that is, linear growth of carbon fibers, and growth of carbon in the form of powder, hard agglomerates and sheet, is reduced. Therefore, the ratio of carbon fiber coils relative to the entire carbon substance manufactured increases. As a result, the yield of carbon fiber coils is increased.

Carbon fiber coils grow to have a circular-shaped cross section. Therefore, their mechanical strength is improved, for example, the tensile strength of the coils, compared with coils that have an oblate cross section, is improved. In practical use, the carbon fiber coils can improve the properties, such as strength or the like, of products.

The hot air generated from the gas fired boiler passes through the heating chamber 24 on the outer peripheral surface of the reaction chamber 12 to heat the reaction chamber 12. Thus, the interior of the reaction chamber 12 is heated uniformly and easily.

DC voltage is applied to the substrate 15 to produce a negative electric field near the substrate 15. Therefore, the reactant, which is positively charged by thermal excitation, is efficiently conducted to the catalyst surfaces. As a result, the quantity of acetylene that is not conducted to the catalyst surfaces and produces side reactions decreases, so the manufacturing cost is reduced. In addition, nickel is used as the catalyst to provide effective, anisotropic, catalytic activity on the surfaces thereof. Thus, carbon fibers that are small in coil diameter and great in coil length are grown.

DC current is applied to the substrate 15. Therefore, the reactant can be more efficiently conducted to the catalyst surfaces as compared with a case where AC current is applied to the substrate 15, that is, a case where the substrate 15 is alternately charged from positive to negative. As a result, the quantity of acetylene that is not conducted to the catalyst surfaces and produces side reactions decreases, which reduces manufacturing costs. Because the quantity of acetylene producing side reactions decreases, the unreacted acetylene can be reused. As a result, the yield of carbon fiber coils increases.

Carbon fiber coils obtained with the method, according to the first embodiment are circular in cross section and have great strength, a small coil diameter and a great coil length, so they can be used for electromagnetic wave absorbing materials, micro-machines, micro-devices and the like.

The total linear velocity of the stock gas, the catalytic gas and the balance gas is set to be in a suitable range of 100 to 3000 cm/min under conditions of room temperature and 1 atm. Therefore, carbon fiber coils grow efficiently and reliably.

The ratio of the distance between the outlet of the inflow port 19 and the substrate 15 to the flow velocity of the stock gas flowing from the inflow port 19 is set in a suitable range. Thus, when the distance is represented in terms of cm units and the flow velocity of the stock gas is represented in terms of linear velocity (cm/min), the distance is set to be 1/10000 to 1/10 of the linear velocity. Therefore, adjustment of the gas flow velocity in accordance with the distance between the inflow port 19 and the substrate 15 can make carbon fiber coils grow efficiently and reliably.

Second Embodiment

The second embodiment will be described mainly with respect to points that are different from the first embodiment.

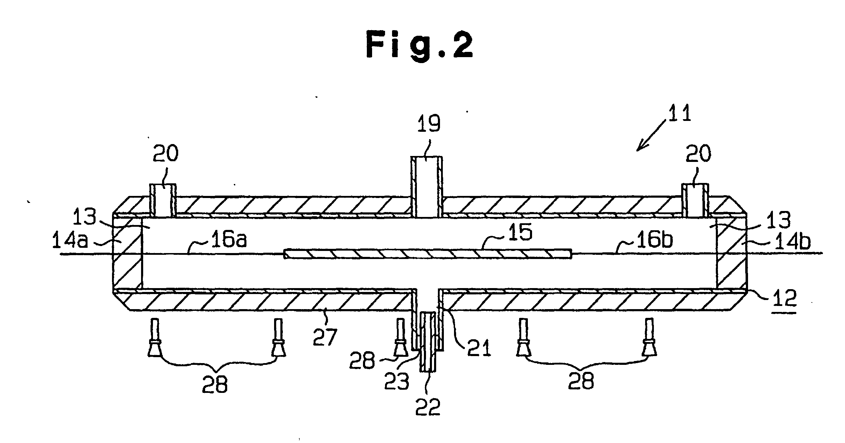

As shown in Figure 2, an apparatus 11 for manufacturing carbon fiber coils according to the second embodiment is substantially the same as that of the first embodiment. In the second embodiment, the manner of heating the reaction chamber 12 is different from that in the first embodiment. Further, DC voltage is not applied to the substrate 15.

Heat resistant asbestos 27 is attached to the outer periphery of the reaction chamber 12. Five propane burners 28 are arranged below the reaction chamber 12. The respective propane burners 28 are spaced a predetermined distance from one another along the length of the reaction chamber 12. Therefore, the entire reaction chamber 12 is uniformly heated to a predetermined temperature.

In the manufacture of carbon fiber coils, similar stock materials for the mixed gases to those in the first embodiment were introduced into the reaction chamber 12, and the five propane burners 28 were used to heat the reaction chamber 12. Then, a reaction was effected at 750 °C for two hours. At this time, voltage was not applied to the substrate 15 and no negative electric field was formed. As a result, most of carbon fiber coils grew in a spiral fashion.

The respective embodiments described above will be more concretely explained on the basis of the following examples and comparative examples.

Example 1

In Example 1, an apparatus similar to the manufacturing apparatus 11 of the second embodiment, in which the five propane burners 28 are used, was used to produce carbon fiber coils. Production of carbon fiber coils was effected in accordance with the above-described process.

A horizontal reaction chamber 12 formed of transparent quartz and having a length of 1000 mm and an inner diameter of 60 mm was used. A substrate 15 coated with nickel catalytic powder was placed at a predetermined position within the reaction chamber 12. At this time, the distance between the outlet of the inflow port 19 and the substrate 15 was 20 mm. The openings 13 at the ends of the reaction chamber 12 were sealed by first seal members 14.

Acetylene, thiophene and hydrogen gases were made to flow into the reaction chamber 12 from the inflow port 19. At this time, the flow velocities of the respective gases were 80 cm/min. for the acetylene, 1 cm/min. for the thiophene, 250 cm/min. for the hydrogen gas. Further, nitrogen gases were permitted to flow into the reaction chamber 12 from a pair of injection ports 20 at 130 cm/min. The total of the flow velocities (linear velocities) of the respective gases was 461 cm/min. Thereafter, the temperature in the reaction chamber 12 was raised to 750 °C by the propane burners 28. This state was maintained for two hours for producing carbon fiber coils.

The total yield of carbon fiber coils, the reaction ratio of acetylene, the yield of lengthy carbon fiber coils (10 mm or more), and the yield of short carbon fiber coils (less than 10 mm) were calculated. Further, the unreacted acetylene was recovered for calculating the theoretical yield of carbon fiber coils assuming that 100% of the acetylene reacted. The carbon fiber coils were measured with respect to diameter, cross sectional configuration and tensile strength.

The total yield of carbon fiber coils was calculated from the weight (g) of carbon fiber coils relative to the weight (g) of carbon in the acetylene introduced. The yield of lengthy carbon fiber coils was calculated from the weight (g) of lengthy carbon fiber coils relative to the weight (g) of carbon in the acetylene introduced. The yield of short carbon fiber coils was calculated from the weight (g) of short carbon fiber coils relative to the weight (g) of carbon in the acetylene introduced. The quantity of unreacted acetylene contained in the discharged gases was found by a gas chromatograph analysis, and the formula (1) was used to calculate the reaction ratio of acetylene. The theoretical yield was calculated in accordance with the formula (2). The respective yields were similarly calculated with respect to Examples 2 to 5 and Comparative Examples 1 and 2.

$$\text{Reaction ratio (\%) =}$$

$$\text{[(weight (g) of carbon in stock acetylene - weight (g) of}$$

$$\text{carbon in unreacted acetylene)/weight (g) of carbon in stock}$$

$$\text{acetylene] x 100} \qquad (1)$$

$$\text{Theoretical yield (\%) = total yield (\%) of carbon fiber x}$$

$$\text{100 (\%)/reaction ratio (\%) of acetylene} \qquad (2)$$

The results are indicated in TABLE 1.

TABLE 1

| | |
|---|---|
| Reaction ratio of acetylene | 20% |
| Yield of lengthy carbon fiber coils | 15% |
| Yield of short carbon fiber coils | 2% |
| Total yield of carbon fiber coils | 17% |
| Theoretical yield of carbon fiber coils assuming 100% of the acetylene reacted | 85% |

As indicated in TABLE 1, 20% of the acetylene reacted. The yield of carbon fiber coils was 17%, among which 15% of the carbon fiber coils were lengthy. Assuming that the unreacted acetylene was recovered to cause 100% of the acetylene reacted, the theoretical yield of carbon fiber coils was 85%. Accordingly, it can be inferred that the yield of carbon fiber coils was high.

The carbon fiber coils thus obtained were wound spirally with extreme uniformity. The carbon fiber coils had a coil diameter of 2 μm and a circular cross section. When the carbon fiber coils were tensioned in a longitudinal direction, they elastically extended to about five times their original length. The tensile strength of the carbon fiber coils was 120 to 150 kg/mm$^2$.

Comparative Example 1

In Comparative Example 1, an electric heater with nichrome wire was used in place of the propane burners 28 and'was placed around the outer periphery of the reaction chamber 12. Otherwise, the device and the process were the same as those in Example 1. The respective yields and reaction ratios were calculated. The results are indicated in TABLE 2.

TABLE 2

| | |
|---|---|
| Reaction ratio of acetylene | 75% |
| Yield of lengthy carbon fiber coils | 5% |
| Yield of short carbon fiber coils | 8% |
| Total yield of carbon fiber coils | 13% |
| Theoretical yield of carbon fiber coils assuming 100% of the acetylene reacted | 17% |

As indicated in TABLE 2, although the reaction ratio of acetylene was high as compared with Example 1, the total yield of carbon fiber coils decreased. This is believed to be due to the consumption of a great amount of the acetylene for undesirable side reactions. The yield of short carbon fiber coils is higher than the yield of lengthy carbon fiber coils. Assuming that the unreacted acetylene was recovered to cause 100% of the acetylene reacted, the theoretical yield of carbon fiber coils was 17%, which is much smaller than that in Example 1.
The carbon fiber coils obtained were oblate in cross section. When the carbon fiber coils were tensioned in a longitudinal direction, they broke when elongated to about three times their original length. The tensile strength of the carbon fiber coils was 45 to 60 kg/mm$^2$.

Example 2

In Example 2, hydrogen sulfide was used as the catalytic gas. Hydrogen sulfide was caused to flow into the reaction chamber 12 at a flow velocity of 0.6 cm/min. Otherwise, the device and the process were the same as those in Example 1. The results are indicated in TABLE 3.

TABLE 3

| | |
|---|---|
| Reaction ratio of acetylene | 30% |
| Yield of lengthy carbon fiber coils | 20% |
| Yield of short carbon fiber coils | 5% |
| Total yield of carbon fiber coils | 25% |
| Theoretical yield of carbon fiber coils assuming 100% of the acetylene reacted | 83% |

As indicated in TABLE 3, the catalytic gas was changed to hydrogen sulfide from thiophene in Example 2, and the yield of lengthy carbon fiber coils and the total yield of carbon fiber coils increased as compared with Example 1. Assuming that the unreacted acetylene was recovered to cause 100% of the acetylene reacted, the theoretical yield of carbon fiber coils was 83%, which is slightly smaller than that in Example 1 but is considerably greater than that in Comparative Example 1.

Example 3

In Example 3, phosphorus trichloride was used as the catalytic gas. Phosphorus trichloride was caused to flow into the reaction chamber 12 at a flow velocity of 0.6 cm/min. Otherwise, the device and the process were the same as those in Example 1. The results are indicated in TABLE 4.

TABLE 4

| | |
|---|---|
| Reaction ratio of acetylene | 35% |
| Yield of lengthy carbon fiber coils | 20% |
| Yield of short carbon fiber coils | 8% |

TABLE 4 (continued)

| | |
|---|---|
| Total yield of carbon fiber coils | 28% |
| Theoretical yield of carbon fiber coils assuming 100% of the acetylene reacted | 80% |

As indicated in TABLE 4, the catalytic gas was changed to phosphorus trichloride from thiophene in Example 3 whereby the yield of lengthy carbon fiber coils and the total yield of carbon fiber coils increased as compared with Example 1. Assuming that the unreacted acetylene was recovered to cause 100% of the acetylene reacted, the theoretical yield of carbon fiber coils was 80%, which is slightly smaller than that in Example 1. However, the theoretical yield is still greater than that in Comparative Example 1.

Example 4

In Example 4, DC voltage of 500 V was applied to the substrate 15 to produce a negative electric field on the substrate 15. Otherwise the device and the process were the same as those in Example 1. The results are indicated in TABLE 5.

TABLE 5

| | |
|---|---|
| Reaction ratio of acetylene | 25% |
| Yield of lengthy carbon fiber coils | 20% |
| Yield of short carbon fiber coils | 3% |
| Total yield of carbon fiber coils | 23% |
| Theoretical yield of carbon fiber coils assuming 100% of the acetylene reacted | 92% |

As indicated in TABLE 5, DC voltage was applied to the substrate 15 in Example 4. The yield of lengthy carbon fiber coils, the total yield of carbon fiber coils, and the yield assuming that 100% of the unreacted acetylene reacted, were increased as compared with Example 1.

Example 5

In Example 5, AC voltage of 7000 V was applied to the substrate 15 to produce an AC electric field on the substrate 15. Otherwise, the device and the process were the same as those in Example 1. The results are indicated in TABLE 6.

TABLE 6

| | |
|---|---|
| Reaction ratio of acetylene | 23% |
| Yield of lengthy carbon fiber coils | 15% |
| Yield of short carbon fiber coils | 3% |
| Total yield of carbon fiber coils | 18% |
| Theoretical yield of carbon fiber coils assuming 100% of the acetylene reacted | 78% |

As indicated in TABLE 6, the total yield of carbon fiber coils, the reaction ratio of acetylene, the yield of lengthy carbon fiber coils and the yield of short carbon fiber coils were substantially the same as those in Example 1. However, the yield where 100% of the unreacted acetylene reacted was decreased as compared with Example 1. However, the theoretical yield was still greater than that in Example 1.

Comparative Example 2

In Comparative Example 2, an electric heater with nichrome wire was used as a heating means. Further, AC voltage was applied to the substrate 15. Otherwise, the device and the process were the same as those in Example 1. The results are indicated in TABLE 7.

TABLE 7

| Reaction ratio of acetylene | 93% |
|---|---|
| Yield of lengthy carbon fiber coils | 5% |
| Yield of short carbon fiber coils | 17% |
| Total yield of carbon fiber coils | 22% |
| Theoretical yield of carbon fiber coils assuming 100% of the acetylene reacted | 24% |

As indicated in TABLE 7, although the reaction ratio of acetylene in Comparative Example 2 was substantially improved as compared with the respective Examples, the total yield of carbon fiber coils was substantially the same as those in Examples 1 to 5. Further, it was indicated that the ratio of lengthy carbon fiber coils was small. The theoretical yield of carbon fiber coils assuming the unreacted acetylene was recovered and 100% of the acetylene reacted was substantially small. That is, it is believed that a great part of the acetylene was consumed for undesirable side reactions in Comparative Example 2.

The first and second embodiments are not limited to the above-described constitutions but may be modified in the following manner.

The reaction chamber 12 may be arranged vertically. In this case, the inflow port 19 extends horizontally, and the substrate 15 is vertical, and the distance between the substrate 15 and the outlet of the inflow port 19 is kept in a predetermined range. Also, the reaction chamber 12 may be inclined. In this case, the inflow port 19 is inclined, and the substrate 15 is inclined, and the distance between the substrate 15 and the outlet of the inflow port 19 is kept in a predetermined range. Carbon fiber coils are formed on the substrate 15 irrespective of the position in which the reaction chamber 12 is installed.

Horizontal reaction chambers 12 may be stacked in several stages and inflow ports 19 may be provided on sides of the reaction chambers 12 so as to permit the stock gas and the catalytic gas to flow into the respective reaction chambers 12. In this case, the ends of the substrates 15 are opposed to the inflow ports 19 and are spaced a predetermined distance from the outlets of the inflow ports 19. With this arrangement, a large quantity of carbon fiber coils are efficiently manufactured in a single manufacturing process.

A plurality of inflow ports 19 may be provided on the outer periphery of the reaction chamber 12 to be spaced from one another at predetermined intervals, and the substrate 15 may be correspondingly extended to face the plurality of inflow ports 19. In this case, carbon fiber coils can be efficiently manufactured in large quantities at a time.

An electrostatic field of high voltage may be formed on the substrate 15. For example, an apparatus for generating a high-voltage electrostatic field is connected to the substrate 15 via the connection wire 16a with the connection wire 16b free at its distal end. In this case, the yield of carbon fiber coils is improved since the electrostatic field is formed on the substrate 15.

A heating system using hot air with the heating chamber 24 of the first embodiment and a heating system using the propane burners 28 of the second embodiment may be used alternately or used in combination. In this case, the yield of carbon fiber coils is also improved since electromagnetic fields outside of the reaction chamber 12 have no influence.

In the first embodiment, carbon fiber coils may be formed without the application of DC voltage on the substrate 15. In this case, the yield of carbon fiber coils is also improved since electromagnetic fields from outside of the reaction chamber 12 have no influence.

Electric heating may be used to heat gas at a location away from the reaction chamber 12 so that the heated gas is used for heating the reaction chamber 12. In this case, because electromagnetic fields outside of the reaction chamber 12 exert no substantial influence, side reactions of acetylene are reduced. Therefore, carbon fiber coils are efficiently manufactured.

**Claims**

1.  A method of manufacturing carbon fiber coils by heating a stock gas, which is subjected to thermal decomposition to generate solid carbon, and a catalytic gas, which promotes thermal decomposition of the stock gas, in a reaction chamber, the method comprising the steps of:

    placing a solid catalyst at a predetermined position within the reaction chamber;
    supplying the reaction chamber with the stock gas and the catalytic gas; and

heating the interior of the reaction chamber to grow carbon fiber coils from the stock gas, wherein electromagnetic field generated in the heating step is substantially not formed in the reaction chamber.

2. The method according to claim 1, wherein the catalytic gas contains elements of the fifteenth and sixteenth groups in the periodic table.

3. The method according to claim 2, wherein the stock gas and the catalytic gas are supplied to the reaction chamber through an inflow port formed in the reaction chamber at a predetermined flow velocity, respectively.

4. The method according to claim 3, wherein-the amount of the stock gas supplied per unit time when represented in terms of linear velocity (cm/min) is in the range of 10 to 10000 times a distance (cm) between an outlet of the inflow port and the-solid catalyst.

5. The method according to claim 4, further comprising applying electric voltage to the catalyst from an external power source to charge the solid catalyst.

6. The method according to claim 5, wherein the external power source is a DC power source and the electric voltage is negative and the solid catalyst is negatively charged.

7. The method according to claim 4, wherein the reaction chamber is heated to a temperature in the range of 700 °C to 830 °C.

8. An apparatus for manufacturing carbon fiber coils from a stock gas, which is subjected to thermal decomposition to generate a solid carbon, and a catalytic gas, which promotes thermal decomposition of the stock gas, the apparatus comprising:

   a reaction chamber supplied with the stock gas and the catalytic gas, the reaction chamber being supplied with the stock gas and the catalytic gas through the inflow port;
   a solid catalyst placed at a predetermined position within the reaction chamber; and
   a heating device for heating the interior of the reaction chamber to grow carbon fiber coils from the stock gas, the heating device being such that there is substantially no electromagnetic field in the reaction chamber when heating.

9. The apparatus according to claim 8, wherein the solid catalyst is located to face an outlet of the inflow port such that a distance (cm) between the solid catalyst and the outlet of the inflow port is in the range of 1/10000 to 1/10 of the inflow velocity (cm/min) of the stock gas flowing through the inflow port.

10. The apparatus according to claim 9, wherein the stock gas contains any one of acetylene, methane and propane.

11. The apparatus according to claim 9, wherein the catalytic gas contains a catalytic gas having elements of the fifteenth and sixteenth groups in the periodic table.

12. The apparatus according to claim 11, wherein the catalytic gas contains any one of sulfur, thiophene, hydrogen sulfide, methylmercaptan, phosphorus and phosphorus trichloride.

13. The apparatus according to claim 10, wherein the catalyst contains fine crystals of nickel.

14. The apparatus according to claim 8, wherein the reaction chamber is heated to a temperature in the range of 700 °C to 830 °C.

15. The apparatus according to claim 14, wherein the heating device comprises a burner or burners.

16. The apparatus according to claim 14, wherein the heating device comprises a heating chamber covering the periphery of the reaction chamber, and a high temperature fluid, which is caused to flow between the heating chamber and the reaction chamber.

17. The apparatus according to claim 8, further comprising an external power source, which applies electric voltage to the solid catalyst to charge the solid catalyst with electricity.

**18.** The apparatus according to claim 17, wherein the external power source is a DC power source and the electric voltage is negative and the solid catalyst is negatively charged.

**Patentansprüche**

**1.** Verfahren zur Herstellung von Kohlenstofffaserspulen durch Erwärmen eines Reaktionsgases, das thermisch zersetzt wird, um festen Kohlenstoff zu erzeugen, und eines Katalysatorgases, das die thermische Zersetzung des Reaktionsgases fördert, in einer Reaktionskammer, welches Verfahren die Schritte enthält:

Anordnen eines Feststoffkatalysators an einer vorbestimmteh Position innerhalb der Reaktionskammer;

Versorgen der Reaktionskammer mit dem Reaktionsgas und dem Katalysatorgas; und

Erwärmen des Innenraumes der Reaktionskammer, um Kohlenstofffaserspulen aus dem Reaktionsgas zu ziehen, wobei ein in dem Erwärmungsschritt erzeugtes elektromagnetisches Feld im wesentlichen nicht in der Reaktionskammer gebildet wird.

**2.** Verfahren nach Anspruch 1, bei welchem das Katalysatorgas Elemente der fünfzehnten und der sechzehnten Gruppe des Periodensystems enthält.

**3.** Verfahren nach Anspruch 2, bei welchem das Reaktionsgas und das Katalysatorgas der Reaktionskammer durch eine in der Reaktionskammer gebildete Einlassöffnung jeweils mit einer vorbestimmten Strömungsgeschwindigkeit zugeführt werden.

**4.** Verfahren nach Anspruch 3, bei welchem die Menge des pro Zeiteinheit zugeführten Reaktionsgases, ausgedrückt in der linearen Geschwindigkeit (cm/min), im Bereich des 10- bis 10.000-fachen der Distanz (cm) zwischen dem Ausgang der Einlassöffnung und dem Feststoffkatalysator liegt.

**5.** Verfahren nach Anspruch 4, ferner enthaltend das Anlegen elektrischer Spannung an den Katalysator von einer extemen Leistungsquelle, um den Feststoffkatalysator zu laden.

**6.** Verfahren nach Anspruch 5, bei welchem die externe Leistungsquelle eine Gleichstrom-Leistungsquelle ist und die elektrische Spannung negativ ist und der Feststoffkatalysator negativ geladen wird.

**7.** Verfahren nach Anspruch 4, bei welchem die Reaktionskammer auf eine Temperatur im Bereich von 700 °C bis 830 °C aufgeheizt wird.

**8.** Vorrichtung zur Herstellung von Kohlenstofffaserspulen aus einem Reaktionsgas, das thermisch zersetzt wird, um festen Kohlenstoff zu erzeugen, und einem Katalysatorgas, das die thermische Zersetzung des Reaktionsgases fördert, welche Vorrichtung enthält:

eine Reaktionskammer, in die das Reaktionsgas und das Katalysatorgas zugeführt werden, wobei das Reaktionsgas und das Katalysatorgas der Reaktionskammer durch die Einlassöffnung zugeführt werden;

einen Feststoffkatalysator, der an einer vorbestimmten Position innerhalb der Reaktionskammer angeordnet ist; und

eine Heizeinrichtung zum Erwärmen des Innenraumes der Reaktionskammer, um Kohlenstofffaserspulen aus dem Reaktionsgas zu ziehen, welche Heizeinrichtung so ausgelegt ist, dass während des Aufheizens im wesentlichen kein elektromagnetisches Feld in der Reaktionskammer vorhanden ist.

**9.** Vorrichtung nach Anspruch 8, bei welcher der Feststoffkatalysator so angeordnet ist, dass er einem Ausgang der Einlassöffnung in der Weise gegenüberliegt, dass ein Abstand (cm) zwischen dem Feststoffkatalysator und dem Ausgang der Einlassöffnung im Bereich von 1/10.000 bis 1/10 der Einströmgeschwindigkeit (cm/min) des durch die Einlassöffnung fließenden Reaktionsgases ist.

**10.** Vorrichtung nach Anspruch 9, bei welcher das Reaktionsgas Acetylen, Methan oder Propan enthält.

11. Vorrichtung nach Anspruch 9, bei welcher das Katalysatorgas ein Katalysatorgas enthält, das Elemente der fünfzehnten und sechzehnten Gruppe des Periodensystems enthält.

12. Vorrichtung nach Anspruch 11, bei welcher das Katalysatorgas Schwefel, Thiophen, Wasserstoffsulfid, Methylmercaptan, Phospor oder Phosphortrichlorid enthält.

13. Vorrichtung nach Anspruch 10, bei welcher der Katalysator feine Nickelkristalle enthält.

14. Vorrichtung nach Anspruch 8, bei welcher die Reaktionskammer auf eine Temperatur im Bereich von 700 °C bis 830 °C erwärmt wird.

15. Vorrichtung nach Anspruch 14, bei welcher die Heizeinrichtung einen oder mehrere Brenner umfasst.

16. Vorrichtung nach Anspruch 14, bei welcher die Heizeinrichtung eine Heizkammer enthält, die den Umfang der Reaktionskammer bedeckt, sowie ein Hochtemperaturfluid, das veranlasst wird, zwischen der Heizkammer und der Reaktionskammer zu fließen.

17. Vorrichtung nach wie Anspruch 8, ferner enthaltend eine externe Leistungsquelle, welche elektrische Spannung an den Feststoffkatalysator anlegt, um den Feststorfkatalysator mit Elektrizität zu laden.

18. Vorrichtung nach Anspruch 17, bei welcher die externe Leistungsquelle eine Gleichstrom-Leistungsquelle ist und die elektrische Spannung negativ ist und der Feststoffkatalysator negativ geladen wird.

**Revendications**

1. Une méthode de fabrication de bobines en fibre de carbone par chauffage d'un gaz de charge, soumis à une décomposition thermique pour générer un carbone solide, et un gaz catalyseur, qui favorise la décomposition thermique du gaz de charge, dans une chambre de réaction, la méthode étant composée des étapes suivantes :

   placer un catalyseur solide à une position prédéterminée dans la chambre de réaction ;
   alimenter la chambre de réaction avec le gaz de charge et le gaz catalyseur; et
   chauffer l'intérieur de la chambre de réaction pour produire les bobines en fibre de carbone à partir du gaz de charge, le champ électromagnétique généré dans la phase de chauffage n'étant pas formé substantiellement dans la chambre de réaction.

2. La méthode selon la revendication 1, **caractérisée en ce que** le gaz catalyseur contient des éléments des groupes 15 et 16 du tableau périodique.

3. La méthode selon la revendication 2, **caractérisée en ce que** le gaz de charge et le gaz catalyseur sont introduits dans la chambre de réaction par une tubulure d'entrée formée dans la chambre de réaction, respectivement à un débit prédéterminé.

4. La méthode selon la revendication 3, **caractérisée en ce que** la quantité de gaz de charge alimentée par unité de temps, lorsqu'elle est représentée en terme de vitesse linéaire (cm/min) se situe dans la fourchette de 10 à 10.000 fois une distance (cm) entre une sortie de la tubulure d'entrée et le catalyseur solide.

5. La méthode selon la revendication 4, comprenant en outre l'application d'une tension électrique au catalyseur à partir d'une source de courant extérieure pour charger le catalyseur solide.

6. La méthode selon la revendication 5, **caractérisée en ce que** la source de courant extérieure est une source de courant continu et la tension électrique est négative et le catalyseur solide est chargé négativement.

7. La méthode selon la revendication 4, **caractérisée en ce que** la chambre de réaction est chauffée à une température dans la fourchette de 700 °C à 830 °C.

8. Un appareillage pour la fabrication de bobines en fibre de carbone avec un gaz de charge soumis à une décomposition thermique pour générer un carbone solide, et un gaz catalyseur, qui favorise la décomposition thermique du gaz de charge, l'appareillage incluant :

une chambre de réaction alimentée par le gaz de charge et le gaz catalyseur, la chambre de réaction étant alimentée en gaz de charge et en gaz catalyseur par la tubulure d'entrée ;
un catalyseur solide placé à une position prédéterminée dans la chambre de réaction; et
un dispositif de chauffage de l'intérieur de la chambre de réaction pour générer les bobines en fibre de carbone à partir du gaz de charge, le dispositif de chauffage étant conçu de telle manière que substantiellement aucun champ électromagnétique n'est généré dans la chambre de réaction pendant le chauffage.

9. L'appareillage selon la revendication 8, **caractérisée en ce que** le catalyseur solide est placé face à une sortie de la tubulure d'entrée de telle manière qu'une distance (cm) entre le catalyseur solide et la sortie de la tubulure d'entrée se situe dans la fourchette de 1/10000 et 1/10 de la vitesse d'entrée (cm/min) du gaz de charge pénétrant par la tubulure d'entrée.

10. L'appareillage selon la revendication 9, **caractérisée en ce que** le gaz de charge contiens indifféremment soit de l'acétylène, soit du méthane ou du propane.

11. L'appareillage selon la revendication 9, **caractérisée en ce que** le catalyseur solide contiens un gaz catalyseur avec des éléments des groupes 15 et 16 du tableau périodique.

12. L'appareillage selon la revendication 11, **caractérisée en ce que** le gaz catalyseur contiens indifféremment soit du sulfure, thiopène, sulfure d'hydrogène, méthylmercaptan, phosphore ou du trichlorure de phosphore.

13. L'appareillage selon la revendication 10, **caractérisée en ce que** le catalyseur contiens des fins cristaux de nickel.

14. L'appareillage selon la revendication 8, **caractérisée en ce que** la chambre de réaction est chauffée à une température dans la fourchette de 700°C à 830°C.

15. L'appareillage selon la revendication 14, **caractérisée en ce que** le dispositif de chauffage inclu un brûleur ou des brûleurs.

16. L'appareillage selon la revendication 14, **caractérisée en ce que** le dispositif de chauffage inclu une chambre de chauffage couvrant la périphérie de la chambre de réaction, et un fluide à haute température, forcé à s'écouler entre la chambre de chauffage et la chambre de réaction.

17. L'appareillage selon la revendication 8, incluant en outre une source extérieure de courant, qui applique une tension électrique au catalyseur solide pour charger le catalyseur solide d'électricité.

18. L'appareillage selon la revendication 17, **caractérisée en ce que** la source de courant extérieure est une source de courant continu et la tension électrique est négative et le catalyseur solide est chargé négativement

# Fig.1

EP 0 982 416 B1

# Fig.2

EP 0 982 416 B1